# EUROPEAN PATENT APPLICATION

(11) **EP 3 696 746 A1**
(43) Date of publication of application: **19.08.2020**
(21) Application number: 19210648.2
(22) Date of filing: 21.11.2019
(51) Int. Cl.: G06Q 10/06

(54) **METHOD AND APPARATUS FOR DETERMINING DESCRIPTION INFORMATION, ELECTRONIC DEVICE AND COMPUTER STORAGE MEDIUM**

(30) Priority: 12.02.2019 CN 201910111860
(71) Applicant: Beijing Baidu Netcom Science and Technology Co., Ltd., Beijing 100085 (CN)
(72) Inventor: ZHANG, Yilin, BEIJING, Beijing 100085 (CN); YANG, Tianxing, BEIJING, Beijing 100085 (CN); SONG, Xunchao, BEIJING, Beijing 100085 (CN); ZHU, Yong, BEIJING, Beijing 100085 (CN)
(74) Representative: Richly & Ritschel Patentanwälte PartG mbB

(57) **Abstract**

Embodiments of the present disclosure relate to a method and apparatus for determining description information, an electronic device and a computer readable storage medium. The method includes: determining a feature representation of received query information. The method further includes determining an element representation matching the feature representation in an event element library, the element representation being generated on the basis of an event recorded in a knowledge base. In addition, the method further includes: acquiring description information of an event corresponding to the matching element representation from the knowledge base; and determining description information corresponding to the query information on the basis of the acquired description information. The technical solution of the present disclosure may determine a processing method for decision-making work accurately and automatically, thereby significantly improving the working efficiency and providing more valuable references for users inside and outside the industry.

## Description

### TECHNICAL FIELD

Embodiments of the present disclosure relate to the field of information processing, in particular to a method and apparatus for determining description information, an electronic device and a computer readable storage medium.

### BACKGROUND

There are a large number of decision-making works in the daily workflow of many industries. This type of work requires a combination of several conditions to determine the use of different strategies or methods to process the work. A large number of similar and highly repetitive tasks consume the effort and time of the relevant practitioners. In addition, other users who are not in the industry do not have the knowledge of the relevant industry. When there are questions related to the industry, it is not convenient and accurate to obtain answers to the questions.

### SUMMARY

According to embodiments of the present disclosure, a solution for determining description information is provided.

In a first aspect of the present disclosure, a method for determining description information is provided, the method including determining a feature representation of received query information. The method further includes: determining an element representation matching the feature representation in an event element library, the element representation being generated on the basis of an event recorded in a knowledge base. In addition, the method further includes: acquiring description information of an event corresponding to the matching element representation from the knowledge base; and determining description information corresponding to the query information on the basis of the acquired description information.

In a second aspect of the present disclosure, an apparatus for determining description information is provided, the apparatus including: a feature representation determination module, configured for determining a feature representation of received query information; an element representation determination module, configured for determining an element representation matching the feature representation in an event element library, the element representation being generated on the basis of an event recorded in a knowledge base; a description information acquisition module, configured for acquiring description information of an event corresponding to the matching element representation from the knowledge base; and a description information determination module, configured for determining description information corresponding to the query information on the basis of the acquired description information.

In a third aspect of the present disclosure, a device is provided, the device including: one or more processors; and a storage apparatus, storing one or more programs, wherein the one or more programs, when executed by the one or more processors, cause the one or more processors to implement the method in the first aspect according to the present disclosure.

In a fourth aspect of the present disclosure, a computer readable storage medium is provided, the medium storing a computer program, wherein the program, when executed by a processor, implements the method in the first aspect according to the present disclosure.

It should be understood that the contents described in the Summary section are not intended to limit key or important features of the embodiments of the present disclosure and the scope of the present disclosure. Other features of the present disclosure can be easily understood through the following descriptions.

### BRIEF DESCRIPTION OF THE DRAWINGS

After reading detailed descriptions with reference to the following accompanying drawings, other features, advantages and aspects of the embodiments of the present disclosure will become more apparent. In these accompanying drawings, same or similar marks represent same or similar elements.
Fig. 1 is a schematic diagram of an example environment in which a plurality of embodiments of the present disclosure may be implemented;
Fig. 2 is a schematic diagram of a knowledge base according to some embodiments of the present disclosure;
Fig. 3 is a flowchart of a process for determining description information according to some embodiments of the present disclosure;
Fig. 4 is a flowchart of a process for establishing an event element library according to some embodiments of the present disclosure;
Fig. 5 is a schematic block diagram of an apparatus for determining description information according to some embodiments of the present disclosure; and
Fig. 6 is a block diagram of a computing device capable of implementing a plurality of embodiments of the present disclosure.

### DETAILED DESCRIPTION OF EMBODIMENTS

The embodiments of the present disclosure will be further described below in detail in combination with the accompanying drawings. Although certain embodiments of the present disclosure are shown in the accompanying drawings, it should be understood that the present disclosure may be implemented in various forms and should not be construed as limiting to these embodiments herein. These embodiments are provided to get more comprehensive and complete understanding of the present disclosure. It should be understood that the accompanying drawings and embodiments of the present disclosure are illustrative only but not limiting the scope of the disclosure.

In the descriptions of the embodiments of the present disclosure, the term "include" and similar terms thereof should be understood as "open including", i.e., "include but not limited to". The term "on the basis of" should be understood as "at least partially on the basis of". The term "one embodiment" or "the present embodiment" should be interpreted as "at least one embodiment". The terms "first," "second," and the like may refer to different or identical objects. Other explicit and implicit definitions may also be included below.

As mentioned above, there is an urgent need for an information processing method with a mechanism similar to a question and answer mechanism, so that a strategy or a method may be determined on the basis of a combination of several conditions to process decision-making works. A similar conventional method that currently exists is as follows, for example, a user needs to manually select information such as "cause category" involved in the decision-making work so as to clarify the scope of similar work, and then a computer generally obtains a probability value of success or failure of one or more processing methods on the basis of simple statistics of data from the similar work. Such method has limitations, because the implementation of the method requires the user to have a high accumulation of relevant knowledge to select the correct cause category or scope of consultation at a human-computer interaction stage, thus increasing the usage threshold of users. At the same time, the users cannot use fast natural language interactions or submit text material directly, which limits users' behaviors. In addition, using the simplest mathematical statistics to determine the "success" or "failure" probability of the same type of question, which only has mathematical reference meaning for the user needs of the prediction and analysis but no practical reference significance. Therefore, how to accurately and automatically determine the processing method for the decision-making work is an urgent problem to be solved.

According to some embodiments of the present disclosure, a solution for determining description information is proposed. In the present solution, a knowledge base in the form of a knowledge map may be pre-generated on the basis of a historical text and data of a certain type of work, and a keyword in a corresponding historical text may be pulled from the knowledge base so as to generate a vectorized condition information set as an event element library. After a user enters a question or a corresponding work text, a keyword may be captured from such question or work text so as to generate vectorized query condition information. When the query condition information matches one or more condition information in the event element library or has a high similarity thereto, a related work text in the knowledge base may be found on the basis of the matching condition information, and then how to process the work queried by the user may be determined on the basis of the texts. The solution of the present disclosure may accurately and automatically determine the processing mode for the decision-making work, significantly improve work efficiency, and may provide more valuable reference for users inside and outside the industry.

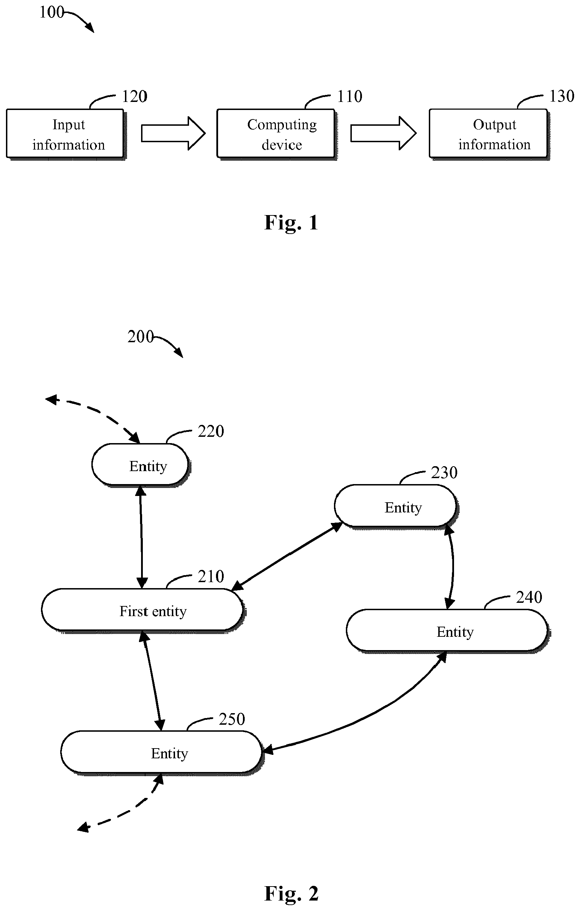

The embodiments of the present disclosure will be specifically described below in combination with these accompanying drawings. Fig. 1 is a schematic diagram of an example environment 100 in which a plurality of embodiments of the present disclosure may be implemented. As shown in Fig. 1, the example environment 100 includes input information 120, a computing device 110 and output information 130. The input information 120 may be query information input by a user, for example, a question asked by the user, a description text of a work or an event. The input information 120 may include one or more features that are considered as conditions, such as the subject matter of an event, and the type of a question. It should be understood that the embodiments of the present disclosure may not be limited to text information, but may alternatively include audio or video information that may be recognized as a text. The computing device 110 may receive the input information 120 and generate the output information 130 of a processing solution associated with the input information 120 on the basis of the input information 120. Further, the output information 130 is generally description information that is strongly associated with the input information 120. The description information may include a method for processing a question in the output information 130, and a historical event that is referenced.

In Fig. 1, the key for generating the output information 130 on the basis of the input information 120 is that query information representing the subject matter of the input information 120 needs to be matched with a plurality of reference information managed by the computing device 110. Once matching reference information is found, the method for processing the question in the output information 130 may be determined on the basis of a processing method corresponding to the reference information. A plurality of pieces of the reference information may be captured from the knowledge base. In some embodiments, the knowledge base may be established in the form of a knowledge map on the basis of massive text information on an Internet or internal text information of a relevant institution. A knowledge base in the form of the knowledge map will be described in detail below.

Fig. 2 shows a schematic diagram of a knowledge base 200 according to some embodiments of the present disclosure. In Fig. 2, a first entity 210 may represent a work or an event that contains an associated record text. As shown in Fig. 2, the knowledge base 200 further includes entities 220, 230, 240 and 250, in addition to the first entity 210. For example, the entity 220 may represent a client of the first entity 210, the entity 230 may represent a staff of the first entity 210, the entity 250 may represent a collaborative staff (e.g., a work recorder) of the first entity 210, and the entity 240 may represent an employer of the entity 230 and the entity 250.

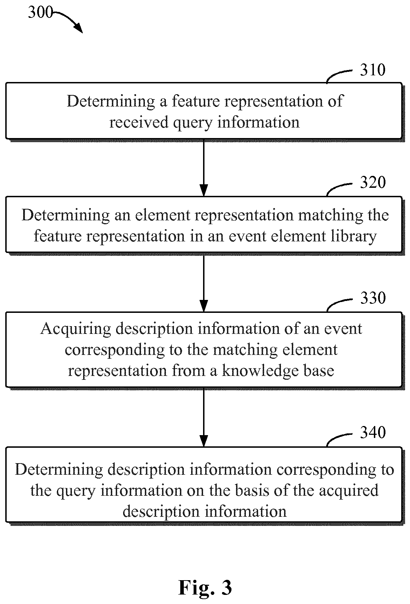

In addition, the knowledge base 200 may further includes a plurality of bidirectional arrows for indicating relationships among these entities. The dashed arrows in Fig. 2 indicate that entities in the diagram may further be associated with other entities. After the knowledge base 200 is established, the computing device 110 may pull, from the knowledge base 200, record texts in a plurality of entities similar to the first entity 210. A set of keywords may be extracted on the basis of each record text. A set of keywords corresponding to each record text is one piece of the reference information above. If a piece of reference information matching the query information indicating the subject matter of the input information 120 is found, the method for resolving the question in the output information 130 may be determined on the basis of the record text corresponding to the piece of reference information. In order to more clearly explain the principle of the solution above, the process of determining the output information 130 will be described in more detail below with reference to Fig. 3.

Fig. 3 is a flowchart of a process 300 for determining description (i.e., output information) 130 according to some embodiments of the present disclosure. The process 300 may be implemented by the computing device 110 shown in Fig. 1, and the computing device 110 may be a standalone device that is arranged on a server side. For ease of discussion, the process 300 will be described in combination with Fig. 1.

Step 310 includes determining a feature representation of received query information (i.e., input information) 120 by means of the computing device 110. In some embodiments, user-entered query information 120 may be received first, then a set of features is extracted from the query information 120, so as to generate the feature representation on the basis of the set of extracted features. As an example, a keyword A and a keyword B may be extracted from a question entered by the user for matching with the plurality of reference information. In some embodiments, for example, in the medical field, the query information 120 may be a medical question asked by any user or a symptom description of any patient. For another example, in the field of legal services, the query information 120 may be a legal question asked by any user or a case description.

More preferably, the extracted feature may alternatively be vectorized. The representation of the vectorized feature is not a form of a keyword but a form of a floating point matrix. Therefore, even if reference information that exactly matches the extracted feature may not be found during matching with the plurality of pieces of reference information, a piece of reference information having a high similarity to or a high matching degree with the extracted feature may be found. For example, in the field of the legal services, the query information 120 may be a description of a question associated with "traffic accident" and "escape". In this case, the computing device may vectorize the combination of the extracted features "traffic accident" and "escape." The vectorization may strongly support upper-layer applications such as recommendations, Q&A and relationship prediction.

Step 320 includes determining an element representation matching the feature representation from an event element library by means of the computing device 110, the element representation being generated on the basis of a specific event recorded in a knowledge base 200. As an example, an element representation whose similarity to the feature representation exceeds a predetermined threshold may be determined from the event element library by means of the computing device 110.

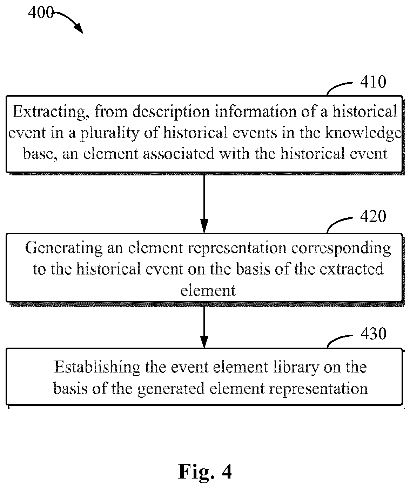

In some embodiments, the knowledge base 200 may be pre-generated on the basis of a plurality of historical events, description information of the plurality of historical events and other associated information. It should be understood that the "historical event" referred to herein is not equivalent to the "specific event", and the "specific event" may be one of a plurality of "historical events". The knowledge base 200 is generated on the basis of the "historical events", while feature representations that make up the event feature library are generated on the basis of the "specific event" in the knowledge base 200 rather than the "historical events", thereby conserving computing resources. The "specific event" may be selected from the "historical events" by technologies such as clustering. As described above, the knowledge base 200 may include a plurality of entities, and some entities (such as the first entity 210 shown in Fig. 2) may represent an event that contains an associated record text. The event element library is established by pulling record texts contained in a plurality of historical events in the knowledge base 200. The process of establishing the event element library will be described in detail below with reference to Fig. 4.

Fig. 4 shows a flowchart of a process 400 for establishing an event element library according to some embodiments of the present disclosure. The process 400 may be implemented by the computing device 110 shown in Fig. 1, and the computing device 110 may be a standalone device that is arranged on a server side. For ease of discussion, the process 400 will be described in combination with Fig. 1.

Step 410 includes extracting, from description information of a historical event in the plurality of historical events in the knowledge base 200, an element associated with the historical event by means of the computing device 110. As an example, the computing device 110 may first determine a plurality of historical events (the events may have particular identifiers, or an entity with description information may be considered as an event) from a plurality of entities in the knowledge base 200, and then pull corresponding description information from the determined events. Further, the computing device 110 may extract a keyword from the corresponding description information. In some embodiments, the keyword may be extracted from the corresponding description information as an element associated with the event by using at least one of a natural language processing (NLP) technology and a term frequency (TFIDF) statistical technology. Compared with the processing of information of all entities in the knowledge base 200, only processing the description information of an entity considered as an event may reduce the amount of computation and save computing resources.

In some embodiments, for example, in the medical field, the event may be at least a portion of a treatment course of a patient, while the corresponding description information may be a medical record that records the details of the treatment course. The medical record may be pulled by the computing device 110, and a word associated with a symptom may be determined as one or more keywords by the word capturing technology. For another example, in the field of legal services, the event may be a case or details of the case, while the corresponding description information may be a legal document that records details of the case. The legal document may be pulled by the computing device 110, and words associated with the various elements in the case may be determined as one or more keywords by means of the word capturing technology.

In addition, in some embodiments, while using the natural language processing technology and the term frequency statistics technology to capture a word, auxiliary labeling may be performed manually by an relevant industry expert on a keyword. Further, auxiliary labeling information from an administrator may be received by the computing device 110, and an element associated with the event may be updated on the basis of the auxiliary labeling information. As an example, when the computing device 110 extracts a keyword A, a keyword B and a keyword C from corresponding description information using the natural language processing technology and the term frequency statistical technology, if the administrator finds that the keyword C is not associated with the industry, keywords corresponding to the corresponding description information may be updated to the keyword A and the keyword B.As another example, if the administrator finds that the corresponding description information is more associated with another keyword D, but such keyword is not determined by the computing device 110 as a keyword due to a small frequency of occurrence in the description information, the administrator may update the keywords corresponding to the corresponding description information as the keyword A, the keyword B, the keyword C and the keyword D. With above three word capturing technologies, but not limited to these three technologies, keywords that are strongly associated with the event may be accurately extracted from a description text of a historical event.

Step 420 includes generating an element representation corresponding to the event on the basis of the extracted element. As an example, if an element associated with the event is determined, such element may be vectorized. For example, after the determination process, elements of a first event are the keyword A, the keyword B and the keyword C, while elements of a second event are the keyword A and the keyword B. If the matching is only performed on these keywords, it can only be determined that the first event is different from the second event. If the elements of these two events are vectorized into a floating point matrix, not only whether the result of the matching between the two events is identical or different is determined, but also the similarity of the two events is determined.

Step 430 includes establishing the event element library on the basis of the generated element representation by means of the computing device 110. It should be noted that the event element library is a set of vectorized elements of all or part of the events in the knowledge base 200. Compared with vectorizing all entities in the knowledge base 200, computation resources may be significantly saved and the working efficiency of a system may be improved by extracting only the keywords of the description text associated with the event from the knowledge base 200 and vectorizing the extracted keywords.

Having described in detail the process of establishing the event element library, it is returned to Fig. 3 to proceed to a process 300 of determining description information (i.e., output information) 130. The process 300 proceeds to step 330 after a matching feature representation is determined from the event feature library.

Step 330 includes acquiring description information of an event corresponding to the matching element representation from the knowledge base 200. It should be understood that the computing device 110 pre-establishes an even element library comprising a plurality of vectorized reference feature representations so as to facilitate querying the feature representation of the input information 120. However, in order to save the storage space of the event feature library and simplify the complexity of the query process, only vectorized feature representations are included in the event feature library. The description information of the corresponding event associated with these element representations is still located at a corresponding location in the knowledge base 200. Therefore, after the matching element representation is determined, it is necessary to look for description information of the event corresponding to the element representation.

Step 340 includes determining description information corresponding to the query information on the basis of the acquired description information. As an example, after the description information is acquired, a keyword may be extracted from the description information to form structured description information as a processing solution for resolving the question in the input information 120, i.e., the output information 130. In some embodiments, for example, in the medical field, the output information 130 may be a diagnostic scheme, a dose and a reference historical case for a relevant condition of a patient. As another example, in the field of legal services, the output information 130 may be the cause of action, sentencing, reference cases and related laws of a relevant case. Of course, for the case of complications in the medical field and the co-occurrence of multiple cases (combined punishment for several offenses) in the legal service field, a co-occurrence probability library may also be generated on the basis of the historical events in the knowledge base 200 so as to provide references for such questions. It should be understood that the examples are merely illustrative and are not intended to limit the embodiments of the present disclosure. Those skilled in the art will fully appreciate that embodiments of the present disclosure may be applied to any suitable scenario and any environment.

Compared with the conventional technology, the solution of the present disclosure adopts many natural language processing technologies, and allows a user to ask a question in a manner closer to the natural language (query information or description text of an event in industry), which reduces the complexity and professional threshold of a conventional technology that relatively professional point-and-click interaction must be used to describe a question. In addition, the solution of the present disclosure employs knowledge mapping technologies rather than simple statistics, thus simulating the thinking mode of a worker in a given work scenario. Therefore, the solution of the present disclosure may simulate the thinking mode of an industry expert more friendly and accurately, and qualitatively and quantitatively propose a reference for processing a certain work, and may provide a basis for the reference and an example event.

The contents above discuss an example in some scenarios that a method for processing the input information 120 input by a user is determined as the output information 130 by combining an element representation of each event in the knowledge base 200. However, it should be understood that the description of such scenarios is merely used to explain the embodiments of the present disclosure by means of examples. Depending on the actual needs, different strategies may be selected in different or similar scenarios so as to maximize the accuracy of the output information 130. It should also be noted that the technical solution of the present disclosure is not limited to the application to the medical and legal service industries, and the technical solution of the present disclosure may also have the various advantages mentioned above when applied to other industries that require extensive experience.

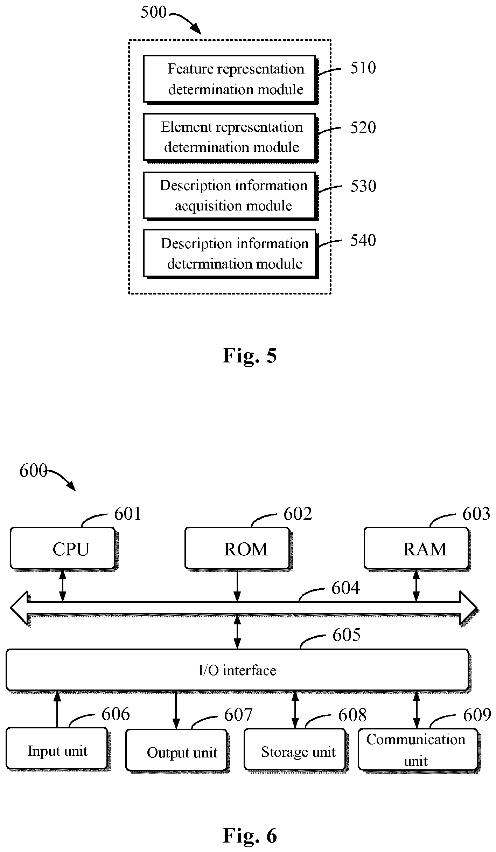

Fig. 5 shows a schematic block diagram of an apparatus 500 for determining description information according to an embodiment of the present disclosure. The apparatus 500 may be included in a computing device 110 shown in Fig. 1 or be implemented as the computing device 110. As shown in Fig. 5, the apparatus 500 includes a feature representation determination module 510 configured for determining a feature representation of received query information. The apparatus 500 further includes an element representation determination module 520 configured for determining an element representation matching the feature representation in an event element library, the element representation being generated on the basis of an event recorded in a knowledge base. The apparatus 500 further includes a description information acquisition module 530 configured for acquiring description information of an event corresponding to the matching element representation from the knowledge base. Further, the apparatus 500 may further includes a description information determination module 540 configured for determining description information corresponding to the query information on the basis of the acquired description information.

In some embodiments, the apparatus 500 may further comprise a knowledge base generation module (not shown) configured for generating the knowledge base on the basis of a plurality of historical events and description information thereof.

In some embodiments, the apparatus 500 may further comprise: an element extraction module (not shown), configured for extracting, from description information of a historical event in the plurality of historical events in the knowledge base, an element associated with the historical event; an element representation generation module (not shown), configured for generating an element representation corresponding to the historical event on the basis of the extracted element; and an event element library establishment module (not shown), configured for establishing the event element library on the basis of the generated element representation.

In some embodiments, the element extraction module includes a keyword extraction module (not shown), configured for extracting a keyword from the description information of the historical event; and an element determination module (not shown), configured for determining an element associated with the historical event on the basis of the keyword. In some embodiments, the apparatus 500 may further include: a labeling information receiving module (not shown), configured for receiving auxiliary labeling information from an administrator; and an element updating module (not shown), configured for updating an element associated with the historical event on the basis of the auxiliary labeling information.

In some embodiments, the feature representation determination module may include: a query information receiving module (not shown), configured for receiving the query information; a feature representation extraction module (not shown), configured for extracting a group of features from the query information; and a feature representation generation module (not shown), configured for generating the feature representation on the basis of the group of extracted features.

In some embodiments, the feature representation generation module is further configured for determining, from the event element library, an element representation whose similarity to the feature representation exceeds a predetermined threshold.

In some embodiments, the query information comprises at least one of followings: query information of a user; and an event description text.

Fig. 6 shows a schematic block diagram of an example device 600 that may be used to implement the embodiments of the present disclosure. The device 600 may be used to implement the computing device 110 shown in Fig. 1. As shown in the Fig. 6, the device 600 includes a central processing unit (CPU) 601 that may perform various appropriate actions and processes according to a computer program instruction stored in a random access memory (ROM) 603 or a computer program instruction loaded in a read only memory (RAM) 602 from a storage unit 608. Various programs and data required for the operation of the device 600 may also be stored in the RAM 603. The CPU 601, the ROM 602 and the RAM 603 are connected to each other through a bus 604. An input/output (I/O) interface 605 is also connected to the bus 604.

A plurality of components in the device 600 are connected to the I/O interface 605, such components including: an input unit 606, such as a keyboard and a mouse; an output unit 607, such as various types of displays and speakers; a storage unit 608, such as a magnetic disk and an optical disk; and a communication unit 609 such as a network card, a modem and a wireless communication transceiver. The communication unit 609 allows the device 600 to exchange information/data with other devices over a computer network such as the Internet and/or various telecommunication networks.

The processing unit 601 performs the various methods and processes described above, such as the process 300. For example, in some embodiments, the process 300 may be implemented as a computer software program that is tangibly embodied in a machine readable medium such as the storage unit 608. In some embodiments, some or all of the computer programs may be loaded and/or installed onto the device 600 by means of the ROM 602 and/or the communication unit 609. When a computer program is loaded into the RAM 603 and executed by the CPU 601, one or more steps of the process 300 may be executed. Alternatively, in other embodiments, the CPU 601 may be configured to execute the process 300 by any other suitable methods (e.g., by means of firmware).

The functions described herein above may be performed, at least in part, by one or more hardware logic components. For example, and without limitation, exemplary types of hardware logic components that may be used include: Field Programmable Gate Array (FPGA), Application Specific Integrated Circuit (ASIC), Application Specific Standard Product (ASSP), System on Chip (SOC), Complex Programmable Logic Device (CPLD), and the like.

Program codes for implementing the method of the present disclosure may be written in any combination of one or more programming languages. These program codes may be provided to a processor or controller of a general purpose computer, special purpose computer or other programmable data processing apparatus such that the program codes, when executed by the processor or controller, enables the functions/operations specified in the flowcharts and/or block diagrams being implemented. The program codes may execute entirely on the machine, partly on the machine, as a stand-alone software package partly on the machine and partly on the remote machine, or entirely on the remote machine or server.

In the context of the present disclosure, the machine readable medium may be a tangible medium that may contain or store programs for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the foregoing.

In addition, although various operations are described in a specific order, this should not be understood that such operations are required to be performed in the specific order shown or in sequential order, or all illustrated operations should be performed to achieve the desired result. Multitasking and parallel processing may be advantageous in certain circumstances. Likewise, although several specific implementation details are included in the above discussion, these should not be construed as limiting the scope of the present disclosure. Certain features described in the context of separate embodiments may also be implemented in combination in a single implementation. Conversely, various features described in the context of a single implementation may also be implemented in a plurality of implementations, either individually or in any suitable sub-combination.

Although the embodiments of the present disclosure are described in language specific to structural features and/or method logic actions, it should be understood that the subject matter defined in the appended claims is not limited to the specific features or actions described above. Instead, the specific features and actions described above are merely exemplary forms of implementing the claims.

## Claims

1. A method for determining description information, the method comprising:
determining (310) a feature representation of received query information;
determining (320) an element representation matching the feature representation in an event element library, the element representation being generated on the basis of an event recorded in a knowledge base;
acquiring (330) description information of an event corresponding to the matching element representation from the knowledge base; and
determining (340) description information corresponding to the query information on the basis of the acquired description information.

2. The method according to claim 1, further comprising:
generating the knowledge base on the basis of a plurality of historical events and description information of the plurality of historical events.

3. The method according to claim 2, further comprising:
extracting (410), from description information of a historical event in the plurality of historical events in the knowledge base, an element associated with the historical event;
generating (420) an element representation corresponding to the historical event on the basis of the extracted element; and
establishing (430) the event element library on the basis of the generated element representation.

4. The method according to claim 3, wherein the extracting an element associated with the historical event comprises:
extracting a keyword from the description information of the historical event; and
determining an element associated with the historical event on the basis of the keyword.

5. The method according to claim 4, further comprising:
receiving auxiliary labeling information from an administrator; and
updating the element associated with the historical event on the basis of the auxiliary labeling information.

6. The method according to claim 1, wherein the determining the feature representation comprises:
receiving the query information;
extracting a group of features from the query information; and
generating the feature representation on the basis of the group of extracted features.

7. The method according to claim 1, wherein the determining an element representation matching the feature representation in the event element library comprises:
determining, from the event element library, an element representation, a similarity of the element representation to the feature representation exceeding a predetermined threshold.

8. The method according to claim 1, wherein the query information comprises at least one of: query information of a user; or an event description text.

9. An apparatus for determining description information, the apparatus comprising a plurality of modules configured to implement the method according to any one of claims 1 to 8.

10. An electronic device, comprising:
one or more processors; and
a storage apparatus, storing one or more programs, wherein the one or more programs, when executed by the one or more processors, cause the one or more processors to implement the method according to any one of claims 1-8.

11. A computer readable storage medium, storing a computer program, wherein the program, when executed by a processor, implements the method according to any one of claims 1-8.
